# EUROPEAN PATENT APPLICATION

(11) **EP 4 831 253 A1**
(43) Date of publication of application: **28.10.2026**
(21) Application number: 25171547.0
(22) Date of filing: 22.04.2025
(51) Int. Cl.: C09D 11/54, C09D 11/102, C09D 11/104, C09D 11/107, C09D 11/322, C09D 11/38, C09D 11/40

(54) **INK SET AND INKJET RECORDING METHOD**

(71) Applicant: AGFA NV, 2640 Mortsel (BE)
(72) Inventor: VAN AERT, Hubertus, 2640 Mortsel (BE); CORTES SALAZAR, Fernando, 2640 Mortsel (BE); BERTELS, Ellen, 2640 Mortsel (BE); YANG, Bingyu, 2640 Mortsel (BE); HEJAZI, Ayman, 2640 Mortsel (BE)
(74) Representative: Lingier, Stefaan Frans L.

(57) **Abstract**

An ink set comprising an aqueous pre-treatment liquid and an aqueous ink comprising a pigment and a water-soluble organic solvent, the aqueous pre-treatment liquid comprises a fixing agent, a second water-soluble organic solvent, a microcapsule comprising a crosslinked polymeric shell surrounding a core, the core comprises a second polymer; characterized in that the microcapsule is stabilized by means of a polyoxyethylene glycol alkyl ether. An inkjet printing method on substrates used in packaging, is also provided.

## Description

### Technical Field

The present invention relates to ink sets comprising a pre-treatment liquid having microcapsules for use in inkjet printing on substrates used for packaging purposes.

### Background Art

Nowadays, there is a growing area of digital pre-printing of liners for corrugated packaging and corrugated card boards. The pre-printing of primers or pre-coats improves the image quality of the image which is printed upon the pre-coat. The possibility to apply a pre-coat, only of the parts which will carry the image, makes it possible to reduce consumption of the pre-coat composition. As the presence of pre-coat negatively influences the adhesion of glue, it is also beneficial to not apply pre-coat on the parts of the packaging material which have to be glued.

In printing of liners for corrugated card boards, usually flexographic printing or offset printing is performed for applying a pre-coat or pre-treatment liquid.

In order to obtain high quality images, the pre-coat is a composition capable of receiving ink and holding colorants in the ink to a greater degree than a substrate not treated with a pre-coat. In particular, the pre-coat is capable of holding colorants at or near the surface of a substrate so that optical density and colour gamut of the printed image may be improved compared to a porous substrate that is not treated with the pre-coat.

The colorant in aqueous inkjet inks for card board printing can be a dye or a pigment. Pigment based inks have the advantage of providing images with a higher light fastness than dye based inks. To bind the pigments to the substrate preferably reactive binder technology has been introduced into the inks but also into the pre-coats. Several approaches have been disclosed in the patent literature.

WO2014/039306A discloses a pre-treatment for digital printing on substrates comprising an aqueous cationic polyurethane dispersion, coagulating acids, and a reactive crosslinking moiety.

US2009/0226678 discloses an ink set comprising a fixing liquid for making pigments of inkjet inks fixed, comprising a polymer fine particle synthesized from an alkyl (meth)acrylate and/or cyclic alkyl (meth) acrylate, and a reactant being a blocked isocyanate, an oxazoline-containing polymer, or a polycarbodiimide.

The use of pre-treatment liquids with fixing agents which precipitate or bind the colorants form the aqueous inkjet inks may have a negative effect on the gloss of the image printed with the combination of the pre-treatment liquid and the aqueous inkjet inks.

In inkjet printing on liners for corrugated packaging, folding boards and corrugated card boards, often an overcoat varnish is applied and dried on top of the printed image and pre-treatment coating matrix to achieve enhanced durability and improved gloss of the inkjet printed images.

Applying a varnish on top of an inkjet printed image has implications regarding the maximal printing speed as the images must be preferably dried before applying a varnish. The printing equipment must also comprise a means of applying the varnish which makes the equipment more complicated and costly.

Therefore, there is still a need for a pre-treatment liquid composition including a fixing agent for the colorants of the inkjet inks, but which does not result in printed images with a medium to low gloss.

### Summary of the invention

It is the objective of the present invention to provide a solution to the above stated problem. The objective has been achieved by providing an ink set, comprising a pre-treatment liquid as defined in Claim 1.

It is another embodiment of the invention to provide a printing method using the ink set comprising the pre-treatment liquid of claim 1 as defined in Claim 13.

Other features, elements, steps, characteristics and advantages of the present invention will become more apparent from the following detailed description of preferred embodiments of the present invention. Specific embodiments of the invention are also defined in the dependent claims.

### Description of embodiments

The invention is about an ink set comprising an aqueous pre-treatment liquid and an aqueous ink comprising a pigment and a first water-soluble organic solvent, the aqueous pre-treatment liquid comprises a fixing agent, a second water-soluble organic solvent, a microcapsule comprising a crosslinked polymeric shell surrounding a core, the core comprises a second polymer characterized in that the microcapsule is stabilized by means of a polyoxyethylene glycol alkyl ether.

### A. Ink set

### A.1. Aqueous pre-treatment liquid

### A.1.1. Fixing agent

The aqueous pre-treatment liquid as part of the ink set according to the invention comprises a fixing agent.

The fixing agent serves to crash, precipitate or destabilize the ink colorants such as dyes or pigments and hence fix them to the substrate. This leads to an improved image quality due to less bleeding, less feathering and/or less coalescence.

The fixing agent is preferably a multivalent metal salt or a cationic polymer.

The multivalent metal salt may be present in the pre-treatment liquid to improve image quality of the inkjet printed image. Generally, the multivalent metal salt may be any water-soluble multivalent metal salt. In specific examples, the multivalent metal salt may include calcium chloride (CaCl₂), magnesium chloride (MgCl₂), magnesium sulfate (MgSO₄), aluminium chloride (AlCl₃), calcium nitrate (Ca(NO₃)₂), magnesium nitrate (Mg(NO₃)₂), magnesium acetate (Mg(CH₃COO)₂), zinc acetate (Zn(CH₃COO)₂) calcium propionate (Ca(C₂H₅COO)₂), or a combination thereof. In further examples, the multivalent metal salt may include a metal cation selected from calcium, copper, nickel, magnesium, zinc, barium, iron, aluminium, chromium, or another multivalent metal.

Polymeric cationic polymers, suitable as fixing agent in the pre-treatment liquid contain either guanidinium or fully quaternized ammonium functionalities, such as quaternized polyamine copolymers. Generally, the weight average molecular weight (Mw) of the cationic polymer allows viscosity less than 25 cP at 25°C (measured on a Brookfield viscometer). Typical Mw are less than 500.000 g/mol, and in one aspect, less than 50.000.

Suitable classes of cationic polymers that can be used include, but are not limited to, quaternized polyamines, dicyandiamide polycations, diallyldimethyl ammonium chloride copolymers, quaternized dimethylaminoethyl(meth)acrylate polymers, quaternized vinylimidizol polymers, alkyl guanidine polymers, alkoxylated polyethylene imines, and mixtures thereof.

### A.1.2. Water-soluble organic solvent

The medium of the pre-treatment liquid according to the invention contains water as a vehicle but may include one or more water-soluble organic solvents.

Preferable water-soluble organic solvents are polyols (e.g., ethylene glycol, glycerin, 2-ethyl-2-(hydroxymethyl)-1 ,3-propanediol, tetraethylene glycol, triethylene glycol, tripropylene glycol, 1,2,4-butanetriol, diethylene glycol, propylene glycol, dipropylene glycol, butyleneglycol, 1 ,6-hexanediol, 1 ,2-hexanediol, 1 ,5-pentanediol, 1,2-pentanediol, 2,2-dimethyl-1 ,3-prapanediol, 2-methyl-2,4-pentanediol, 3-methyl-1 ,5-pentanediol, 3-methyl-1 ,3-butanediol, and 2-methyl-1 ,3-propanediol), N-hydroxyethyl-pyrrolidon, N-butyl-pyrrolidon, amines (e.g., ethanolamine, and 2-(dimethylamino)ethanol), monohydric alcohols (e.g., methanol, ethanol, and butanol), 2,2'-thiodiethanol, amides such as N,N-dimethylformamide, heterocycles such as 2-pyrrolidone and N-methyl-2-pyrrolidone, acetonitrile or glycol ethers.

Examples of suitable glycol ethers include monoalkyl ethers of glycol selected from ethylene glycol, diethylene glycol, triethylene glycol, propylene glycol, dipropylene glycol, and tripropylene glycol. More specifically, triethylene glycol monomethyl ether, triethylene glycol monobutyl ether, and dipropylene glycol monopropyl ether can be preferably exemplified. Other useful examples which are listed in the Swiss list A and hence compatible with food packaging are: Propylene Glycol Monomethyl Ether; Propylene Glycol Monoethyl Ether; Propylene Glycol Monopropyl Ether; Ethylene Glycol Monobutyl Ether; Propylene Glycol Monobutyl Ether; Diethylene Glycol Monoethyl Ether; Diethylene Glycol Monobutyl Ether; Dipropylene Glycol Mono n-Propyl Ether; Dipropylene Glycol Methyl Ether; Tripropylene Glycol Monomethyl Ether. These solvents may be used alone or in combination of two or more.

In a preferred embodiment of the invention, the water-soluble organic solvent is an alkane diol. This alkane diol is incorporated in the aqueous pre-treatment liquid to prevent drying and clogging of ejection nozzles due to aggregates formed of adhered and dried liquid.

Clogging of the ejection nozzles of a print head impairs severely the jetting reliability, especially at the start-up of the printing process and during long printing jobs.

For preventing pre-treatment liquid drying at the ejection nozzles, the alkane diol preferably has a lower vapor pressure than that of water. Examples of the water-soluble alkane diols are ethylene glycol, propylene glycol, 1,3-propane diol, diethylene glycol, triethylene glycol, tetraethylene glycol, pentaethylene glycol, dipropylene glycol, 1,3-butanediol, 2,3-butanediol, 2-butene-1,4-diol, 2-ethyl-1,3-hexanediol, 2-methyl-2,4-pentanediol, 1,2-octanediol, 1,2-hexanediol, 1,2-pentanediol, 4-methyl-1,2-pentanediol, 2-ethyl-2-methyl-1,3-propanediol, 3,3-dimethyl-1,2-butanediol, 2,2-diethyl-1,3-propanediol, 2-ethyl-1,3-hexanediol, 2,2,4-trimethyl-1,3-pentanediol, 2-methyl-2-propyl-1,3-propanediol, 2,4-dimethyl-2,4-pentanediol, 2,5-dimethyl-2,5-hexane diol, 5-hexene-1,2-diol, 2-ethyl-1,3-hexanediol, tripropylene glycol, polypropylene glycol having the number of propylene oxide groups of greater than or equal to 4, butylene glycol, 1,6-hexanediol, pentanediol, thiodiglycol.

### A.1.3. Resin

The pre-treatment liquid in the ink set according to the invention may comprise a resin. The resin improves the mechanical and water resistance of the printed image. The resin is preferably selected from a group consisting of an aqueous soluble carboxylic acid containing polymer or salt thereof, a carboxylic acid anhydride containing polymer, a poly(urethane) or copolymer thereof, an acrylate or copolymer thereof, a poly(ester) or copolymer thereof and a poly(styrene) or copolymer thereof and a microcapsule comprising a crosslinked polymeric shell surrounding a core, the core comprises a second polymer.

In a preferred embodiment of the invention the resin to be included in the pre-treatment liquid of the ink set of the invention is a microcapsule comprising a crosslinked polymeric shell surrounding a core, the core comprises a second polymer.

The microcapsule dispersions can be prepared by means of interfacial polymerization in which an organic phase (e.g. based on ethyl acetate) and an aqueous phase are mixed using a dispersion process. During and/or after the dispersion process a polyisocyanate is reacting to form crosslinked particles. In the dispersion process an amine crosslinker is added or reaction of the isocyanate with water generates the formation of an amine, which forms in both cases crosslinked particles containing urea groups. Whereas the crosslinking starts mainly at the water - organic phase interface the formed particles are considered as microcapsules having a higher crosslink density at the shell of the particles. In a preferred embodiment a second polymer such as a polyurethane (PU) can be added during the preparation. The PU can be present both in the core of the particle and in the shell of the particle. If the used PUs contain also a polyether diol this may provide also a non-ionic stabilization of the microcap. A preferred polyether diol is Ymer N90, which is known under CAS registry number 131483-27-7, ie. α-[2,2-bis(hydroxymethyl)butyl]-ω-methoxy-poly(oxy-1,2-ethanediyl).

The dispersion process consists out of two steps: an emulsification step and a distillation step. The emulsification step can be done by different techniques, including but not limited to rotor-stator emulsification (high shear mixers), high pressure homogenization, microfluidics or ultrasound. The distillation step can be done in batch as well as in a continuous mode using a falling film evaporator, a short path or a thin film evaporator. Afterwards a post curing step can be applied in order to be sure that most or all isocyanate groups have reacted. This can be done by reacting at elevated temperature (e.g. 60 C°) but also at room temperature.

The microcapsules are preferably present in an aqueous pre-treatment liquid in an amount of no more than 45 wt.%, preferably between 1 and 25 wt.% based on the total weight of the ink or liquid. It was observed that above 30 wt.% jetting was not always so reliable. Below 1 wt.%, the effect on improved physical properties of the printed image is negligible.

The capsules to be used in a jettable pre-treatment liquid, have an average particle size of no more than 4 µm as determined by dynamic laser diffraction. The nozzle diameter of inkjet print heads is usually 20 to 35 µm. Reliable inkjet printing is possible if the average particle size of the capsules is five times smaller than the nozzle diameter. An average particle size of no more than 4 µm allows jetting by jetting heads having the smallest nozzle diameter of 20 µm. In a more preferred embodiment, the average particle size of the capsules is ten times smaller than the nozzle diameter. Hence preferably, the average particle size is from 0.05 to 2 µm, more preferably from 0.10 to 1 µm. When the average particle size of the capsule is smaller than 2 µm, excellent resolution and dispersion stability with time are obtained.

### A.1.3.1. Polymeric shell

The polymeric shell encapsulates the second polymer and may also assure the dispersibility of the microcapsule in the aqueous vehicle of the pre-treatment liquid.

There is no real limitation on the type of polymer in the polymeric shell of the capsule. Preferably, the polymer is cross-linked. By crosslinking, more rigidity is built into the capsules allowing a broader range of temperatures and pressures for handling the capsules both in the ink making and in the inkjet printing equipment.

Preferred examples of the polymeric shell material include polyureas, polyurethanes, polyesters, polycarbonates, polyamides, polysulphonamides, melamine based polymers, silica based sol-gel polymers or mixtures thereof such as in US603149B1, with polyureas and polyurethanes being especially preferred, polyurea being the most preferred.

The capsules are dispersed in the aqueous medium of the pre-treatment liquid or the pre-treatment liquid preferably via a dispersing group covalently bonded to the polymeric shell and are further stabilised surfactants preferably added during or after the formation of the capsule such polyoxyethylene glycol alkyl ether based surfactants.

### A.1.3.2. Second polymer

The second polymer which is comprised in the core of the microcapsule included in the pre-treatment liquid according to the invention, maybe any known polymer. Preferably, the second polymer is a polymer which is substantially free of a reactive group selected from the group consisting of an ethylenically unsaturated group, an epoxy group, an isocyanate group, a β-keto-ester, a β-keto-amide, an active methylene group and a 1,3-diketone. Due to the absence of these groups, the second polymer is non-polymerisable and hence not significantly able to react with the shell monomers. This reactivity towards shell monomers, limits the latitude for encapsulation of these polymers based on interfacial polymerization, which is a concern for industrialization and scalability. Latitude in the industrialization of the core shell particles is of key importance to avoid loss in production, leading to significant economic and ecologic losses.

Example of an ethylenically unsaturated group, is a (meth)acrylic group, a vinyl group, an allyl group and a styryl group.

Preferably, the second polymer is soluble in substantial water immiscible organic solvents. In a preferred embodiment, the second polymer is selected from the group consisting of poly(urethane)s and copolymers thereof, acrylics and copolymers thereof, poly(ester)s and copolymers thereof, poly(styrene)s and copolymers thereof, poly(vinyl amide)s and copolymers thereof, poly(olefine)s and copolymers thereof, poly(vinyl alcohol) derivatives and copolymers thereof, poly(acetals) and copolymers thereof, poly(ethers) and copolymers thereof, polyamides and copolymers thereof, poly(imides) and copolymers thereof, poly(imines) and copolymers thereof, polycarbonates and copolymers thereof, poly(vinyl chloride) and copolymers thereof, poly(vinylidene chloride) and copolymers thereof, poly(amic acids) and copolymers thereof, poly(saccharides) and derivatives thereof, cellulose and derivatives thereof and combinations thereof. Derivatives of poly(saccharides) and cellulose are esters and ethers as disclosed in https://en.wikipedia.org/wiki/Cellulose. They comprise cellulose acetate, cellulose triacetate, Cellulose propionate, Cellulose acetate propionate (CAP), Cellulose acetate butyrate (CAB), Nitrocellulose (cellulose nitrate), Cellulose sulfate, methylcellulose, ethylcellulose, ethyl methyl cellulose, hydroxyethyl cellulose, hydroxypropyl cellulose, hydroxyethyl methyl cellulose, hydroxypropyl methyl cellulose, ethyl hydroxyethyl cellulose, carboxymethyl cellulose.

Poly(urethanes) and acrylics are particularly preferred. Acrylics are defined as polymeric resins obtained by polymerization or copolymerization of acrylates, methacrylates, acrylamides and methacrylamides. In the present invention, acrylate and methacrylate based polymers and copolymers are particularly preferred.

In a preferred embodiment, the second polymer and the first shell monomer such as a polyisocyanate, are mixed prior to the high shear treatment of the interfacial polymerization. The second polymer should then be preferably soluble in the organic solvents forming the oleophilic phase in the interfacial polymerization (see § A.1.3.) or should have at least segments which are soluble or swellable in the organic solvents.

Segmented second polymers, such as graft- or block copolymers, where the different segments have a different solubility in the organic solvent can be used. The presence of hydrophilic segments such as in graft copolymers with polyether chains in the second polymer, seems to be helpful in obtaining microcaps having a particle size of less than 500nm, even less than 200 nm.

When the second polymer is a polyurethane, the incorporation of the hydrophilic grafts can be accomplished by means of copolymerization of polyether diols. When the second polymer is a polyacrylate, the incorporation of hydrophilic grafts can be accomplished by graft copolymers of methacryl terminated polyethylene glycol. Examples are a polyethylene glycol functional polyacrylate copolymer such as Byk LPG21241, or polyethylene glycol based block copolymers which are well soluble in the organic phase (ethyl acetate). Such block copolymers contain then besides the water compatible polyether chains also segments which are insoluble in water (e.g. polyester, polyether).

Suitable polyether diols in the present invention, are Ymer N120, Ymer N90 or Tegomer D 3403, i.e. α-[2,2-bis(hydroxymethyl)butyl]-ω-methoxy-Poly(oxy-1,2-ethanediyl). These diols can be prepared from trimethylol propane oxetane (TMPO). A possible synthesis procedure is described by Fock, J.; Möhring, V., Polyether-1,2- and -1,3-diols as macromonomers for the synthesis of graft copolymers, 1. Synthesis and characterization of the macromonomers. Die Makromolekulare Chemie 1990, 191 (12), 3045-3057. In general, also other polyether 1,2- or 1,3-diols can be used.

The second polymer can be a poly(ester). Suitable poly(esters) can be selected from the group consisting of copolymers of dicarboxylic acids like terephtalic acid, isophalic acid, adipic acid, succinic acid or alkylesters thereof or copolymers prepared by ring opening polymerisation of cyclic esters, such as caprolactone or cyclic diesters like DL-lactide.

Suitable poly(ethers) as second polymer can be selected from the group consisting of polyalkylene oxides or copolymers, polyphenylene oxide, polystyrene oxide and polyTHF.

Suitable poly(acetals) as second polymer can be selected from the group consisting of poly(vinyl butyral), polyvinylacetaldehyde, and reaction products of hydroxyfunctional polymers with aliphatic or aromatic aldehydes.

Suitable poly(urethanes) as second polymer can be obtained by polymerization of di- or polyisocyanates with diols. Typical di-isocyanates can be selected from the group consisting of isophorone diisocyanate (IPDI), 4,4'-dicyclohexylmethane diisocyanate (H12MDI), 2,4,4'-trimethyl-1,6-hexamethylene diisocyanate (TMDI), hexamethylene diisocyanate (HMDI), pentamethylene diisocyanate (PDI), tolylene diisocyanate (TDI), xylene diisocyanate (XDI) and diphenylmethane diisocyanate (MDI).

Diols can be low molecular weight compounds but oligomeric diols are particularly preferred. Typical oligomeric diols can be selected from the group consisting of polyester polyols, polyether polyols, polyamide polyols, polyacrylate polyols, polycarbonate polyols and polyolefine polyols.

Suitable acrylics as second polymer are obtained by polymerization of monomers selected from the group consisting of ethylacrylate, butylacrylate, methylmethacrylate, ethylmethacrylate, methyl acrylate, butylmethacrylate, 2-ethylhexyl acrylate, 2-ethylhexyl methacrylate, stearyl acrylate, stearyl methacrylate, lauryl acrylate, lauryl methacrylate, cetyl acrylate, cetyl methacrylate, cyclohexyl acrylate, cyclohexyl methacrylate, isopropyl acrylate, isopropyl methacrylate and copolymers of acrylic or methacrylic monomers with monomers selected from the group consisting of alpha-methylstyrene, vinylacetate, vinyl versatate, butadiene, isoprene, acrylonitrile, methacrylonitrile, styrene, para-methylstyrene, tert.-butylstyrene, butyl vinylether, hydroxybutyl vinylether and ethylene.

The second polymer preferably has a weight average molecular weight (M_{w}) between 500 g/mol and 400.000 g/mol, more preferably between 1000 g/mol and 100.000 g/mol and most preferably between 2000 g/mol and 50.000 g/mol.

The second polymer preferably has a numeric average molecular weight (Mn) between 300 g/mol and 200.000 g/mol, more preferably between 1000 g/mol and 50.000 g/mol and most preferably between 1000 and 30.000 g/mol.

### A.1.3.3. Preparation of the microcapsules

The microcapsules included in the pre-treatment liquid of the invention can be prepared using both chemical and physical methods. Suitable encapsulation methodologies include complex co-acervation, liposome formation, spray drying and polymerization methods.

In the present invention preferably a polymerization method is used, as it allows the highest control in designing the capsules. More preferably interfacial polymerization is used to prepare the capsules of the invention. This technique is well-known and has been reviewed by Zhang Y. and Rochefort D. (Journal of Microencapsulation, 29(7), 636-649 (2012) and by Salitin (in Encapsulation Nanotechnologies, Vikas Mittal (ed.), chapter 5, 137-173 (Scrivener Publishing LLC (2013)).

In interfacial polymerization, such as interfacial polycondensation, two reactants meet at the interface of the emulsion droplets and react rapidly.

In general, interfacial polymerization requires the emulsion of an oleophilic phase in an aqueous continuous phase or vice versa. The oleophilic phase is preferably obtained by using a substantially water immiscible organic solvent. Each of the phases contains at least one dissolved monomer (a first shell monomer) that is capable of reacting with another monomer (a second shell monomer) dissolved in the other phase. Upon polymerisation, a polymer is formed that is insoluble in both the aqueous and the oleophilic phase. As a result, the formed polymer has a tendency to precipitate at the interface of the oleophilic and aqueous phase, hereby forming a shell around the dispersed phase, which grows upon further polymerisation. The capsules according to the present invention are preferably prepared from an oleophilic emulsion in an aqueous continuous phase.

Typical polymeric shells of the capsules according to the invention and formed by interfacial polymerisation are selected from the group consisting of polyamides, typically prepared from di- or poly-acid chlorides as first shell monomers and di- or oligoamines as second shell monomers, polyurea, typically prepared from di- or oligoisocyanates as first shell monomers and di- or oligoamines as second shell monomers, polyurethanes, typically prepared from di- or oligoisocyanates as first shell monomers and di- or oligoalcohols as second shell monomers, polysulfonamides, typically prepared from di- or oligosulfochlorides as first shell monomers and di- or oligoamines as second shell monomers, polyesters, typically prepared from di- or oligo-acid chlorides as first shell monomers and di- or oligoalcohols as second shell monomers and polycarbonates, typically prepared from di- or oligo-chloroformates as first shell monomers and di- or oligoalcohols as second shell monomers. The shell can be composed of combinations of these polymers.

In a preferred embodiment of the invention, interfacial polymerization is performed and a polyurea shell is formed at the interface. Preferably, the first shell monomer is a polyisocyanate present in the oleophilic phase, while polyamines are present in the aqueous phase as the second shell monomer and which acts as a crosslinker. Polyamines are preferred whereas polyols show a much slower reaction rate. Alternatively, the second shell monomer can be omitted as water can react with the isocyanate moiety and can form an amine. This in-situ formed amine can then further react with another isocyanate moiety present in the polyisocyanate. So even without adding a second shell monomer a crosslinked polyurea shell can be obtained.

In a particularly preferred embodiment, the shell is composed of a polyurea or a combination thereof with a polyurethane. In a further preferred embodiment, a substantial water immiscible solvent is used in the dispersion step, which is removed by solvent stripping before or after the shell formation. In a particularly preferred embodiment, the water immiscible solvent has a boiling point below 100°C at normal pressure. Esters and ketones are particularly preferred as water immiscible solvent.

A substantial water immiscible solvent is an organic solvent having low miscibility in water. Low miscibility is defined as any water solvent combination forming a two-phase system at 20°C when mixed in a one over one volume ratio.

The core of the microcap contains the second polymer. This is usually incorporated into the capsules by dissolving it in the organic solvent having low miscibility with water and having a lower boiling point than water. A preferred organic solvent is ethyl acetate, because it also has a low flammability hazard compared to other organic solvents.

A preferred strategy to incorporate stabilizing groups into the polymeric shell of a capsule makes use of cationic functionalized reactive surfactants that are capable of reacting with isocyanates. This leads to an amphoteric type of surfactant containing at least partially secondary or primary amines.

In a preferred embodiment of the invention, the microcaps are prepared with the polyoxyethylene glycol alkyl ether added in the aqueous continuous phase. Suitable polyoxyethylene glycol alkyl ethers are listed in § A.1.4. The use of these polyoxyethylene glycol alkyl ethers seem to stabilise the microcaps in the composition of the pre-treatment liquid of the invention. Without being bound by any theory, it is thought that the non-ionic steric stabilization from the polyoxyethylene glycol alkyl ether does prevent interaction between the microcaps and the fixing agent which may be a cationic polymer or a multivalent salt. In the event the polyoxyethylene glycol alkyl ether is present as a free compound in the pre-treatment liquid, it prevents severe agglomeration or flocculation of the fixing agent. Furthermore, the presence of polyoxyethylene glycol alkyl ether in the pre-treatment liquid may lead to an increase of the viscosity which further causes a slower sagging of possible agglomerates.

The capsules according to the invention are dispersed into an aqueous medium. The aqueous medium consists of water, but may preferably include one or more water-soluble organic solvents.

### A.1.4. Polyoxyethylene glycol alkyl ether

The aqueous pre-treatment liquid according to the invention comprises a polyoxyethylene glycol alkyl ether. Without being bound by a theory, it is thought that the polyoxyethylene glycol alkyl ether can stabilize the microcaps in the vehicle which comprises water and a water-soluble organic solvent and a fixing agent. Suitable polyoxyethylene glycol alkyl ethers are polyoxyethylene lauryl ether, polyoxyethylene octyl phenyl ether, polyoxyethylene oleyl phenyl ether, polyoxyethylene nonyl phenyl ether, oxyethylene-oxypropylene block copolymer, t-octyl phenoxyethyl polyethoxyethanol, and nonylphenoxy ethyl polyethoxyethanol.

The polyoxyethylene glycol alkyl ether may be present in an amount not less than 0.4 wt.% with respect to the total weight of the pre-treatment liquid. If the amount is less than 0.4 wt.%, the stabilizing effect of the polyoxyethylene glycol alkyl ether is insufficient and storage stability of the pre-treatment liquid and the advantageous coating effects of the ink on gloss of printed images are not observed. Preferably the amount of polyoxyethylene glycol alkyl ether is not less than 0.5 wt.% and not more than 2.5 wt.% with respect to the total weight of the ink.

More specifically, an oleyl or stearyl type polyoxyethylene glycol alkyl ether can be included at from 0.4 wt.% to 2.5 wt.% with respect to the total weight of the pre-treatment liquid, and can be defined by the following formulations:
Oleyl type polyoxyethylene glycol alkyl ether

C₁₈H₃₅(CH₂CH₂O)ₙH Formula I

Stearyl type polyoxyethylene glycol alkyl ether

C₁₈H₃₇(CH₂CH₂O)ₙH, Formula II

where n ranges from 2 to 100, preferably 10 to 100. The main difference between the oleyl type and the stearyl type polyoxyethylene glycol alkyl ether is the presence of a single "cis" unsaturated (oleyl) group along the hydrocarbon chain in Formula I, whereas the hydrocarbon chain in Formula II is fully saturated.

The oleyl type polyoxyethylene glycol alkyl ether may be obtained commercially under the trade name Brij^{®} OX, where O represent oleyl and X is from 2-20 (i.e. n of Formula I is from 2 to 100, preferably from 10 to 30). In one specific example, Brij^{®} O10 (where n=10 in Formula I) works well in accordance with examples of the present disclosure. Other surfactants that may be used include Brij^{®} O20 (n=20 in Formula I), Brij^{®} O2 (n=2 in Formula I), Brij^{®} O3 (n=3 in Formula I), Brij^{®}) O5 (n=5 in Formula I), etc. Other tradenames are e.g. Rokanol O20 = Oleyl alcohol, ethoxylated (supplied by PCC Exol).

The stearyl type polyoxyethylene glycol alkyl ether may be obtained as a formulation sold under the trade name Brij^{®} SX, where S represent stearyl and X is from 2-20 (i.e. n of the Formula II above is from 2 to 20). Examples include Brij^{®} S10 (n=10 in Formula II), Brij^{®} S5 (n=5 in Formula II), Brij^{®} S15 (n=15 in Formula II), Brij^{®} S20 (n=20 in Formula II), Brij^{®} S2 (n=2 in Formula II), Brij^{®} S7 (n=7 in Formula II), etc.

When comparing different suppliers of stearyl ethoxylates slight differences in behavior can be found, since the alkyl length is in most cases not exactly a C₁₈ chain but a mixture with alkyl chains with a different length e.g. containing also C₁₆ chains. Furthermore, when comparing different tradenames with a different degree of ethoxylation, even though the average the degree of ethoxylation might be the same, there might be a difference in the chain length distribution. E.g. a Brij S20 does not only contain chains with 20 EO units but also chains with shorter and longer degree of ethoxylation. Besides the stearyl ethoxylates with tradename Brij^{®} SX, one can also use e.g. Sympatens AS/100 (MB) = Steareth-10 (supplied by KLK Oleo), SYMPATENS AS/200 (MB) = Steareth-20 with HLB = 15,2 (supplied by KLK Oleo), Hedicol-EM/102 (FC) (MB) = Alcohol C₁₈ ethoxylated with HLB = appr. 8 (supplied by KLK Oleo), Hedicol-EM-101 FC MB = Alcohol C₁₈ ethoxylated with HLB = appr. 9,5 (supplied by KLK Oleo), ROLFOR HT25 = Alcohols, C₁₆₋₁₈, ethoxylated with HLB = appr. 16 (supplied by Lamberti) and Rokanol S20 - steareth-20 (supplied by PCC Exol)

The alkyl ethoxylate may also contain a mixture of saturated and unsaturated alkyl groups, e.g. Rokanol K21 ie. Alcohols, C₁₆₋₁₈ and C₁₈-unsatd., ethoxylated (supplied by PCC Exol).

The polyoxyethylene glycol alkyl ether can contain also other alkylene oxide units besides ethylene oxide, e.g. propylene oxide, and butylene oxide. Examples are Ecosurf LF30 = C_{12/14}-(EO)10(BO)1, Ecosurf LF45 = C_{12/14}-(EO)10(BO)2, Ecosurf LF20 = C_{12/14}-(EO)10(BO)3 (Supplied by Dow), Plurafac LF401 = CAS regsitry number 69227-21-0 = C₁₂₋₁₈-(EO/PO)n (supplied by BASF), Sympatens-ASP/150 = Alcohol C₁₈, propoxylated = CAS registry number 25231-21-4 (supplied by KLK Oleo)

### A.1.5. Additives

The pre-treatment liquid may contain at least one pH adjuster. Suitable pH adjusters include organic amines, NaOH, KOH, NEt₃, NH₃, HCl, HNO₃ and H₂SO₄.

The pre-treatment liquid may contain a surfactant. Any known surfactant may be used but preferably a non-ionic oxirane, mono(2-propylheptyl) ether or fatty alcohol alkoxylate or a combination of both is used.

A biocide may be added to the pre-treatment liquid composition to prevent unwanted microbial growth, which may occur over time. The biocide may be used either singly or in combination. Suitable biocides include sodium dehydroacetate, 2-phenoxyethanol, sodium benzoate, sodium pyridinethion-1-oxide, ethyl p-hydroxybenzoate and 1,2-benzisothiazolin-3-one and salts thereof.

Preferred biocides are are Promex Clear from Chemventis, ProxelTM GXL and Proxel^{™} Ultra 5 available from ARCH UK BIOCIDES and Bronidox^{™} available from COGNIS..

A biocide is preferably added to the aqueous medium in an amount of 0.001 to 3 wt.%, more preferably 0.01 to 1.0 wt. %, each based on the total weight of the liquid.

The pre-treatment liquid may further comprise at least one thickener for viscosity regulation in the liquid. Suitable thickeners are hydrophilically modified PU thickeners (HEUR) like Thijet 170 from Lamberti and alkaline soluble emulsions (ASE) like Byk LPR21675 from Byk Chemie or polyacrylic ester copolymers such as copolymers of ethyl acrylate and methacrylic acid, and salts thereof.

The thickener is added preferably in an amount of 0.01 to 20 wt.%, more preferably 0.1 to 10 wt.% based on the liquid.

### A.2. Aqueous inkjet ink.

The aqueous inkjet ink included in the ink set of the present invention includes at least a) an aqueous medium; and b) a pigment.

### A.2.1. Pigment

The pigment of the aqueous inkjet ink may be black, white, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH, 2004. ISBN 3527305769.

Suitable pigments are disclosed in paragraphs [0128] to [0138] of WO 2008/074548.

The pigment particles are dispersed in an aqueous medium by means of a polymeric dispersant or a surfactant. Self-dispersible pigments may also be used. If combined with capsules having anionic dispersing groups, anionic surfactants may be preferably used as dispersant for the pigment. A self-dispersible pigment is a pigment having on its surface covalently bonded anionic hydrophilic groups, such as salt-forming groups or the same groups used as dispersing groups for the capsules, that allow the pigment to be dispersed in an aqueous medium without using a surfactant or a resin. Suitable commercially available self-dispersible colour pigments are, for example, the CAB-O-JET^{™} inkjet colorants from CABOT.

Pigment particles in inkjet inks should be sufficiently small to permit free flow of the ink through the inkjet-printing device, especially at the ejecting nozzles. It is also desirable to use small particles for maximum colour strength and to slow down sedimentation.

The average pigment particle size is preferably between 0.050 and 1 µm, more preferably between 0.070 and 0.300 µm and particularly preferably between 0.080 and 0.200 µm. Most preferably, the numeric average pigment particle size is no larger than 0.150 µm. The average particle size of pigment particles is determined with a Brookhaven Instruments Particle Sizer Bl90plus based upon the principle of dynamic light scattering. The ink is diluted with water to a pigment concentration of 0.002 wt.%. The measurement settings of the BI90plus are: 5 runs at 23°C, angle of 90°, wavelength of 635 nm and graphics = correction function.

However, for white pigment inkjet inks, the numeric average particle diameter of the white pigment is the same as described in § B.1.

Suitable white pigments are given by Table 2 in [0116] of WO 2008/074548. The white pigment is preferably a pigment with a refractive index greater than 1.60. The white pigments may be employed singly or in combination. Preferably titanium dioxide is used as pigment with a refractive index greater than 1.60. Suitable titanium dioxide pigments are those disclosed in [0117] and in [0118] of WO 2008/074548.

Suitable polymeric dispersants for the pigments are copolymers of two monomers but they may contain three, four, five or even more monomers. The properties of polymeric dispersants depend on both the nature of the monomers and their distribution in the polymer. Co-polymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable dispersants are DISPERBYK^{™} dispersants available from BYK CHEMIE, JONCRYL^{™} dispersants available from BASF and SOLSPERSE^{™} dispersants available from Lubrizol. A detailed list of non-polymeric as well as some polymeric dispersants is disclosed by MC CUTCHEON. Functional Materials, North American Edition. Glen Rock,N.J.: Manufacturing Confectioner Publishing Co., 1990. p.110-129.

The polymeric dispersant has preferably a number average molecular weight Mn between 500 and 30000, more preferably between 1500 and 10000.

The polymeric dispersant has preferably a weight average molecular weight Mw smaller than 100,000, more preferably smaller than 50,000 and most preferably smaller than 30,000.

The pigments are preferably present in the range of 0.01 to 20 %, more preferably in the range of 0.05 to 10 % by weight and most preferably in the range of 0.1 to 5 % by weight, each based on the total weight of the inkjet ink. For white inkjet inks, the white pigment is preferably present in an amount of 3% to 40% by weight of the inkjet ink, and more preferably 5% to 35%. An amount of less than 3% by weight cannot achieve sufficient covering power.

In a preferred embodiment of the invention the aqueous ink comprises a pigment which is encapsulated by means of a cross-linked polymeric shell. Encapsulated pigments provide printed images having improved physical properties such as water resistance and dry rub resistance with respect to pigments dispersed by means of un-cross-linked polymers.

Suitable encapsulated pigments are provided by Lubrizol as Diamond HSDX-dispersions and by Fujifilm as RxD pigment dispersions such as APD1000 and APD4000 premium dispersions.

### A.2.2. Aqueous medium

The aqueous medium of the ink contains water, but may preferably include one or more water-soluble organic solvents. Suitable solvents which can be incorporated in the inks are described in § A.1.2.

### A.2.3. Resin

The ink jet ink composition according to the invention may further comprise a resin. The resin is often added to the ink jet ink formulation to further achieve a good adhesion of the pigment to the substrate or to increase water and solvent resistance of the printed images. The resin is preferably a polymer and suitable resins can be acrylic based resins, a urethane-modified polyester resin, a microcapsule or a wax. Suitable waxes are polyethylene wax, polypropylene wax and polytetrafluoroethylene wax, and the like. In an example, the wax is selected from the group consisting of polypropylene waxes, high density polyethylene (HDPE) waxes, and combinations thereof.

In a preferred embodiment of the invention de aqueous inkjet ink may comprise a microcapsule. Suitable microcapsules which can be incorporated in the inks are described in § A.1.3. In a more preferred embodiment of the invention, the aqueous inkjet ink may comprise microcaps which are stabilized by polyoxyethylene glycol alkyl ethers. Additional improvements in gloss of the printed image are then achieved.

In another preferred embodiment of the invention, the dispersing group covalently bonded to the polymeric shell, is preferably selected from the group consisting of a carboxylic acid or salt thereof, a sulfonic acid or salt thereof, a phosphoric acid ester or salt thereof, a phosphonic acid or salt thereof.

The dispersing group can be used in combination with a polymeric dispersant in order to accomplish steric stabilization. For example, the polymeric shell may have covalently bonded carboxylic acid groups that interact with amine groups of a polymeric dispersant. A slightly alkaline aqueous medium will turn the carboxylic acid groups covalently bonded polymeric shell into ionic groups, whereafter the negatively charged capsules have no tendency to agglomerate. If sufficient dispersing groups are covalently bonded to the polymeric shell, the capsule becomes a so-called self-dispersing capsule.

These negatively charged capsule surfaces can be advantageously used during inkjet printing. For example, a pre-treatment liquid containing a cationic substance, being a cationic polymer or multivalent salt, can be used to precipitate the anionic capsules in the inkjet ink printed. By using this method an improvement in image quality can be observed due to the immobilisation of the capsules of the ink which results in a higher sharpness, less bleeding and less coalescence.

The resin particles according to the invention are preferably present in the inkjet ink in an amount of no more than 30 wt.%, preferably between 2 and 25 wt.% based on the total weight of the inkjet ink. It was observed that above 30 wt.% jetting was not always so reliable.

In a preferred embodiment, the inkjet ink according to the invention is part of a multi-colour inkjet ink set including a plurality of inkjet inks. The multi-colour inkjet ink set preferably includes at least a cyan inkjet ink, a magenta inkjet ink, a yellow inkjet ink and a black inkjet ink. Such a CMYK-inkjet ink set may also be extended with extra inks such as red, green, blue, violet and/or orange to further enlarge the colour gamut of the image. The inkjet ink set may also be extended by the combination of the full density inkjet inks with light density inkjet inks. The combination of dark and light colour inks and/or black and grey inks improves the image quality by a lowered graininess.

In a preferred embodiment, the inkjet ink set also includes a white inkjet ink. This allows obtaining more brilliant colours, especially on transparent substrates, where the white inkjet ink can be applied either as a primer, on top of a primer containing cationic compounds or on top of the colour inkjet inks when the image is viewed through the transparent substrate.

The viscosity of the inkjet ink is preferably smaller than 25 mPa.s at 25°C and at a shear rate of 90 s⁻¹, more preferably between 2 and 15 mPa.s at 25°C and at a shear rate of 90 s⁻¹.

The surface tension of the inkjet ink is preferably in the range of about 18 mN/m to about 70 mN/m at 25°C, more preferably in the range of about 20 mN/m to about 40 mN/m at 25°C.

### A.2.4. Additives

The inkjet ink may also contain humectants. Humectants are preferably incorporated in the inkjet ink if this liquid has to be applied by means of a jetting technique such as inkjet or valve jet. Humectants prevent the clogging of nozzles. The prevention is due to its ability to slow down the evaporation rate of the inkjet ink, especially the water in the liquid. The humectant is preferably a water-soluble organic solvent. Suitable organic solvents are listed in §A.1.2.

The humectant is preferably added to the liquid formulation in an amount of 0.1 to 20 wt.% based on the total weight of the liquid.

The inkjet ink may contain a surfactant for obtaining good spreading characteristics on a substrate.. Any known surfactant may be used but preferably a glycol surfactant and/or an acetylene alcohol surfactant and /or a polysiloxane surfactant is used. The use of the acetylene glycol surfactant and/or the acetylene alcohol surfactant and/or the polysiloxane surfactant further reduces bleeding to improve printing quality, and also improves the drying property in printing to allow high-speed printing.

The acetylene glycol surfactant and/or the acetylene alcohol surfactant is preferably one or more selected from 2, 4, 7, 9-tetramethyl-5-decine-4, 7-diol, alkylene oxide adducts of 2,4,7,9-tetramethyl-5-decine-4, 7-diol, 2,4-dimethyl-5-decin-4-ol, and alkylene oxide adducts of 2,4-dimethyl-5-decin-4-ol. These are available, for example, from Air Products (GB) or from Nissin Chemical Industry, e.g Olfine (registered trademark) such as Olfine E1010, 104 series and Surfynol (registered trademark) E series, as 465 and Surfynol 61.

A particularly useful surfactant for the ink from the ink set according to the invention is a polyoxyethylene glycol alkyl ether. The presence of a polyoxyethylene glycol alkyl ether in the ink does stabilise the microcaps and provides a higher gloss of the printed images. Suitable polyoxyethylene glycol alkyl ethers are listed in §A.1.4.

### A.3. Varnish

A varnish may be included in the ink set according to the invention. The varnish may be used to protect the inkjet printed image against wet & dry rubbing, scratches and solvents. The varnish therefor, comprises water and resin particles.

Examples of the resin particles included in the varnish include well-known resins such as a urethane-based resin, an acrylic resin, a fluorene-based resin, a polyolefin-based resin, a rosin modified resin, a terpene-based resin, a poly-ester-based resin, a polyamide-based resin, an epoxy-based resin, and a vinyl chloride-based resin. The vinyl chloride-based resin includes a vinyl chloride copolymer such as a vinyl chloride-vinyl acetate copolymer. These resins may be used alone, or two or more thereof may be used in combination.

Among the aforementioned resin particles, the resin included in the varnish is preferably a urethane-based resin, an acrylic resin, a styrene-acrylic resin or a polyolefin-based resin.

### B. Inkjet printing method

In a preferred inkjet recording method, the method comprises the steps of:
a) applying a pre-treatment liquid of the ink set according to the invention on at least a part of a substrate; and
b) jetting an aqueous inkjet ink of the ink set according to the invention on at least a part of the substrate where a pre-treatment liquid was applied; and;
c) drying the jetted inkjet ink by applying heat such as to obtain a temperature of the jetted ink of at least 50°C, more preferably at least 80° C.

The inkjet recording method including the ink set according to the invention is suitable for making images onto substrates, such as the one intended for packaging applications.

The substrate in the inkjet recording method may be porous, such as e.g. textile, paper and leather. Porous substrates include paper, card board, white lined chipboard, corrugated board, packaging board, folding board, wood, ceramics, stone, leather and textile. The papers can be a single layer of a multilayer paper.

The paper may be brown Kraft, White Top or bleached board. The paper may be manufactured from chemical, wood, or recycled fibre. As an example, the paper may be a liner intended for printing on page wide web presses and converted into corrugated boxes. In this aspect, the liner paper may be used as a double face liner and may be converted directly in a corrugator or laminated onto a double face liner after corrugation. The paper may also be boards used for boxes and other packaging applications.

The pre-treatment liquid according to the invention is also useful for printing on non-absorbing substrates such as polyethylene, polypropylene, polycarbonate, polyvinyl chloride, polyesters like polyethylene terephthalate (PET), polyethylene naphthalate (PEN), polylactide (PLA), polymethylmethacrylate or polyimide.

The substrates may be transparent, translucent or opaque. Preferred opaque substrates includes so-called synthetic paper, like the Synaps^{™} grades from Agfa-Gevaert which are an opaque polyester sheet having a density of 1.10 g/cm³ or more.

### B.1. Application method of the pre-treatment liquid

The pre-treatment liquid according to the present invention is suitable for treating different substrates, porous and non-porous ones. The treatment by the pre-treatment liquid according to the invention, provides a fixing of the colorants of an ink which is jetted onto the applied pre-treatment liquid to form the printed image. The fixing strongly limits the colour bleeding, increases the sharpness of the image, provides a good spreading of the inkjet ink and increases the water and solvent resistance of the printed images.

All well-known conventional methods can be used for coating or impregnating the substrate by the pre-treatment liquid. Examples of the method include air knife coating, blade coating, roll coating, flexographic coating, gravure coating and spraying. More preferably the pre-treatment liquid is applied by means of a jetting technique, such as an inkjet technique. The pre-treatment liquid is then preferably applied using an ink jet head or valve jet head.

This means of applying the pre-treatment liquid, which is preferably according to an image, has the advantage that the amount of required pre-treatment liquid is substantially lower than with coating methods. This reduces material cost and decreases the required time for drying the applied amount of pre-treatment liquid. High jetting reliability of the pre-treatment liquid is obtained because the resin particles do not show film formation in inkjet head nozzles and supply equipment.

Suitable ink jet head types for applying the pre-treatment liquid are piezoelectric type, continuous type, thermal print head type, Memjet-type or valve jet type.

After applying the pre-treatment liquid onto a substrate, the liquid is preferably at least partially dried before printing the image with aqueous inkjet inks onto the treated substrate.

In another preferred embodiment of the invention, the pre-treatment liquid, is not substantially dried before the image is printed by means of the jetting of the aqueous ink jetting step.

### B.2. Ink jetting & drying

After the application of the pre-treatment liquid to the substrate, an aqueous inkjet ink of the ink set according to the invention is jetted onto the substrate, preferably at least onto the parts where the pre-treatment liquid has been applied on.

A preferred ink jet head for the jetting of the pre-treatment liquid and inkjet ink is a piezoelectric ink jet head. Piezoelectric inkjet jetting is based on the movement of a piezoelectric ceramic transducer when a voltage is applied thereto. The application of a voltage changes the shape of the piezoelectric ceramic transducer in the print head creating a void, which is then filled with pre-treatment liquid. When the voltage is again removed, the ceramic expands to its original shape, ejecting a drop of ink from the ink jet head.

The jetting of the aqueous inkjet ink is not restricted to piezoelectric inkjet printing. Other inkjet print heads can be used and include various types, such as a continuous type, a thermal print head type, a Memjet-type of head and a valve jet type.

Examples of the heating process to dry the inkjet ink according to the invention is preferably performed by using heat sources; examples include equipment for forced-air heating, radiation heating such as IR-radiation, including NIR-, CIR- and SWIR radiation, conduction heating, highfrequency drying, and microwave drying. Examples of the heating process include, but are not limited to, heat press, atmospheric steaming, highpressure steaming, and THERMOFIX. Any heat source can be used for the heating process; for example, an infrared ray lamp is employed. The drying step is such that a temperature of the printed images is preferably obtained below 150°C.

### B.3. Applying a varnish

In a preferred embodiment of the invention, a varnish may be applied during or after the jetting of the inkjet ink in step b).

All well-known conventional methods can be used for coating or printing the varnish onto at least a part of the image. Examples of the method include air knife coating, blade coating, roll coating, gravure coating and spraying. The advantage of the coating or printing technique is that thick varnish layers in one pass of the recording medium can be obtained to assure sufficient rub resistance of the image.

The varnish is preferably applied via a jetting technique which allows to apply the varnish selectively onto the image. This means of applying the varnish composition, which is preferably according to an image, has the advantage that the amount of required varnish material is substantially lower than with the other application methods. The jetting heads suitable for jetting the varnish are the same as described in § B.2.

Finally, the applied varnish is dried according to one of the ways described above for drying the pre-treatment liquid or the aqueous inkjet ink.

### C. Examples

### C.1. Materials

All materials used in the following examples were readily available from standard sources such as Sigma-Aldrich (Belgium) and Acros (Belgium) unless otherwise specified. The water used was demineralised water.
- **Dynacoll 7150** is a polyester polyol containing terephthalic ester and isophthalic ester units supplied by Evonik
- **Ymer N90** is 1,3 diol polyether supplied by Perstorp
- **Ymer N120** is 1,3 diol polyether supplied by Perstorp
- **Reaxis C708** is a catalyst supplied by Reaxis BV
- IPDI is an IPDI monomer supplied by Evonik
- **Vestanat T1890E IPDI,** is a 70% IPDI trimer solution in butyl acetate, supplied by Evonik
- **Desmodur N3200** is an HDI based polyisocyanurate supplied by Covestro
- **Tolonate HDB LV** is HDI based polyisocyanurate supplied by Ravago
- **Desmodur N75** is a HDI biuret from Covestro
- **Lakeland ACP70** is a 70% solution of a N-coco alkyl β-alanine derivative, supplied by Espachem
- **BD** is 1,4-butane diol supplied by Acros
- **Triethylamine** is triethylamine supplied by Acros
- **PU-3** is an aqueous dispersion of a polyurethane resin and is prepared as the resin PU-3 in WO2019/106089 A.
- **2,2'-Azobis(2-methylbutyronitrile)** is an initiator obtained from Wako Chemicals
- **NeoCryl A-1127** is a 44 wt.% aqueous polyacrylate dispersion from DSM NeoResins
- **Mowinyl 6969D** is a 42 wt.% aqueous polyacrylate dispersion from Japan Coating Resin Corporation
- **PD** is 1,2-propanediol, manufactured by Dow Chemical
- **Ultralube GA 1042** is a wax and supplied by Grolman
- **COL-1** is a commercial cyan pigment dispersion supplied by Lubrizol Corp., available under the trade name HSDCX-1
- **COL-2** is a commercial magenta pigment dispersion supplied by Lubrizol Corp., available under the trade name HSDMX-1
- **COL-3** is a commercial yellow pigment dispersion supplied by Lubrizol Corp., available under the trade name HSDYX-1
- **COL-4** is a commercial black pigment dispersion supplied by Lubrizol Corp., available under the trade name HSDKX-1
- **HD** is 1,2-hexanediol
- **SURF-1** is Surfynol 104PG50 supplied by Evonik
- **SURF-2** is BRIJ S20 supplied by Croda Chemicals International LTD
- **SUBST-1** is an MM-X liner of 180 gsm supplied by MM Karton

### C.2. Measuring methods

### C.2.1. Sample preparation

Pre-treatment liquids were coated with an automated bar coater using a 4 µm spiral bar at 'speed 5' on SUBST-1. The coated pre-treatment liquids were then dried for 1 minute at 60°C in an oven to obtain a pre-treatment coating. Consequently, inkjet inks were coated onto the pre-treatment coating with an automated bar coater using a 10 µm spiral bar at 'speed 11'on the respective substrates. The coated inkjet inks were dried for 5 minutes in an oven at 80°C.

### C.2.2. Gloss of ink coatings

The measurement of the gloss of the dried ink coatings obtained in §

C.2.1. is done by means of a GLOSS Zehntner at a viewing angle of 60°.

### C.3. Preparation of microcapsules

### C.3.1. Preparation of anionic microcapsule C-CAP-1

This microcapsule is prepared by means of an interfacial polymerisation using an organic phase comprising a PU-1 solution and a polyisocyanate Tolonate HDB LV and an aqueous phase comprising surfactant Lakeland ACP70, triethyl amine and I-lysine. The PU solution used in this example is described as PU-1 solution based on Dynacol 7150, Ymer N90 and IPDI, using a Dynacol 7150/Ymer N90 weight ratio of 80/20.

### <PU-1 solution>

A polyurethane-solution PU-1 is prepared according to following steps. Ymer N90 is preheated in an oven at 60 C. 543 g of Ymer N90 is transferred to a 10 liter double jacketed reactor. The reactor is equipped with a nitrogen inlet and a slow nitrogen flow was put over the reactor. Subsequently 3815 g of ethyl acetate is added to the reactor. 2171 g of Dynacol 7150 was added to a stirred reactor. The reactor is heated to 60 °C in order to get a clear solution. In a 1 liter Erlenmeyer 20 g of Reaxis C708 is dissolved in 175 gram of ethyl acetate and added to the reactor. The reactor was heated to 70 °C. Subsequently 276 g of Vestanat IPDI was added via an addition funnel with pressure equalization arm for 20 minutes. Subsequently the reaction was allowed to react overnight for 19 hours at 70 °C. Then the reactor was cooled to room temperature. A solids content of 45.0% of the PU-1 solution was determined by drying a small sample (2 g) for 120 minutes at 120 °C.

### <Microcapsule C-CAP-1>

This microcapsule was prepared using an interfacial polymerization dispersion method implementing mixing an aqueous phase and organic phase based on ethyl acetate and subsequent evaporation of the ethyl acetate and curing of the formed microcapsule. For this dispersion the aqueous phase was prepared in a 10 liter Radleys reactor. The aqueous phase was prepared one day in advance of the dispersion preparation. The following products were added to the reactor: 430 g of Lakeland ACP70, 166 g of L-lysine and 6210 g of demi-water. The reactor is heated to 60 °C and stirred for 30 minutes to dissolve the components into the water. The aqueous solution is cooled to room temperature and the solution is kept for the next day without stirring. Then 184 g of triethylamine is added to the aqueous solution of Lakeland ACP70 and I-Lysine and stirred for 45 minutes. The organic phase is prepared max. 1 hour in advance of the dispersion preparation in a 5 liter round bottom flask. The following products were added to the flask: 1012 g of PU-1 solution, 1366 g of Tolonate HDB LV and 1800 g of ethyl acetate. The aqueous phase and organic phase were dispersed using high shear and subsequently the ethyl acetate was evaporated. After evaporation of the ethyl acetate the emulsion was kept at 30 °C for 18 hours in a stirred reactor and filtered over an 2.7 micron filter. The solids content of the obtained emulsion was 27.1 %.

### C.3.2. Preparation of non-ionic microcapsules ICAP-1 and ICAP-2

An inventive microcapsule dispersion ICAP-1 was prepared via interfacial polymerization using an organic phase comprising a weight ratio of PU and polyisocyanate (Desmodur N3200) of 50/50 and using an aqueous phase containing Brij S20. The PU solution used in this example is described as PU-2 solution based on Dynacol 7150, Ymer N90 and IPDI, using a Dynacol 7150/Ymer N90 weight ratio of 60/40.

ICAP-2 was prepared via interfacial polymerization using an organic phase comprising a weight ratio of PU and polyisocyanate (Desmodur N3200) of 25/75 and using an aqueous phase containing Brij S20. The PU solution used in this example is described as PU-2 solution based on Dynacol 7150, Ymer N90 and IPDI, using a Dynacol 7150/Ymer N90 weight ratio of 60/40.

### <Preparation of PU-2 solution>

A polyurethane-solution PU-2 is prepared according to following steps. 84.65 g of Dynacol 7150 was dissolved in 201.45 g of ethyl acetate at room temperature in an Erlenmeyer of 500 ml. Subsequently 56.44 g of Ymer N90 was added. The Ymer N90 was preheated in an oven at 90 C. This solution was prepared one day in advance of the polycondensation reaction. A catalyst solution was prepared by dissolving 1.07 g of Reaxis C708 in 9.67 g of Ethyl acetate. A 3 necked round bottom flask of 500 ml equipped with a coiled condenser and an overhead stirrer was used for the polycondensation reaction. The solution of Ymer N90 and Dynacal 7150 was transferred to the round bottom flask. The catalyst solution was added to the round bottom flask. The reactor content was heated to 75 °C. 16.94 g of Vestanat IPDI was added an addition funnel with pressure equalization arm for 33 minutes. Then the round bottom flask was put to 70 °C and the reaction was allowed to react overnight for 22 hours. After reacting overnight, the reactor content was put again to 75 °C for 30 minutes and then cooled to room temperature. A solids content of 41.85% of the PU-2 solution was determined by drying a small sample for 120 minutes at 85 °C.

### <Preparation of microcapsule ICAP-1>

A microcapsule was prepared using an interfacial polymerization dispersion method implementing mixing an aqueous phase and organic phase based on ethyl acetate and subsequent evaporation of the ethyl acetate and curing of the formed microcapsule. In a first 100 ml pot the following products were added: 13.60 g of PU-2 solution, 33.07 g of ethyl acetate, 17.07 g of Desmodur N3200. In a second pot (250 ml) was added 3.38 g Brij S20 and 62.03 g of demi-water. Both pots were put in an ice batch. We add the content of organic solution mixture to the aqueous solution mixture and dispersed using a high shear mixing device and subsequently the ethyl acetate was evaporated. The obtained emulsion was then cured at 60 °C overnight for 18 hours. The solids content of the obtained microcapsule dispersion was 27.33%.

### <Preparation of microcapsule ICAP2>

This microcapsule was prepared the same way as ICAP1 but with following product amounts: 27.19 g of PU-2 solution, 25.16 g of ethyl acetate, 11.38 g of Desmodur N3200. The solids content of the obtained microcapsule dispersion was 26.22%.

### C.4. Preparation of the ink sets

### C.4.1. Aqueous pre-treatment liquids

Comparative and inventive pre-treatment liquids were prepared by mixing the compounds given in Table *1*: Composition of comparative and inventive pre-treatment liquids Table 1. All weight percentages are relative to the total weight of the liquids.

**Table 1: Composition of comparative and inventive pre-treatment liquids**

| Ingredient | C-PL1 | I-PL1 | I-PL2 |
|---|---|---|---|
| Mowinyl 6940 | 12.5 | 12.5 | 12.5 |
| ICAP-1 | - | 18.30 | - |
| ICAP-2 | - | - | 19.07 |
| Hydropalat WE3650 | 1.0 | 1.0 | 1.0 |
| SURF-3 | 10.0 | 10.0 | 10.0 |
| Fixing agent | 30.0 | 30.0 | 30.0 |
| Aquacer 2700 | 2.5 | 2.5 | 2.5 |
| PD | 25.0 | 25.0 | 25.0 |
| pH | 5.3 | 5.2 | 5.2 |
| WATER | To complete to 100% | To complete to 100% | To complete to 100% |

Inks were prepared by mixing the compounds given in Table 2. and Table 3 . All weight percentages are relative to the total weight of the inks.

**Table 2: Composition of the aqueous inkjet inks**

| Ingredient | I-INK1 | I-INK2 | I-INK3 | I-INK4 |
|---|---|---|---|---|
| PD | 42.0 | 35.0 | 37.0 | 33.3 |
| SURF-1 | 0.67 | 0.67 | 0.67 | 0.67 |
| SURF-2 | - | - | - | 3.33 |
| C-CAP-1 | 21.4 | 21.4 | 21.4 | 21.4 |
| COL-1 | 13.16 | - | - | - |
| COL-2 | - | 22.5 | - | - |
| COL-3 | - | - | 19.6 | - |
| COL-4 | - | - | - | 20.1 |
| Ultralube | 0.7 | 1.5 | 0.7 | 0.9 |
| WATER | To complete to 100% | To complete to 100% | To complete to 100% | To complete to 100% |

**Table 3: Composition of aqueous inkjet inks**

| Ingredient | I-INK5 | I-INK6 | I-INK7 | I-INK8 |
|---|---|---|---|---|
| PD | 42.0 | 35.0 | 37.0 | 33.3 |
| SURF-1 | 0.67 | 0.67 | 0.67 | 0.67 |
| SURF-2 | - | - | - | 3.33 |
| ICAP-1 | 20.7 | 20.7 | 20.7 | 20.7 |
| COL-1 | 13.2 | - | - | - |
| COL-2 | - | 22.5 | - | - |
| COL-3 | - | - | 19.6 | - |
| COL-4 | - | - | - | 20.1 |
| Ultralube GA 1042 | 0.7 | 1.5 | 0.7 | 0.9 |
| WATER | To complete to 100% | To complete to 100% | To complete to 100% | To complete to 100% |

### C.5. Results of gloss measurements of coatings obtained with ink sets.

Comparative and inventive ink sets were obtained by combining comparative and inventive pre-treatment liquids from Table 1 with aqueous inkjet inks from Table 2 and Table 3. The gloss of the coatings obtained with these ink sets as described in § C.2.1. are measured according to § C.2.2. The measured gloss values are listed in Table 4.

**Table 4: Gloss values of coatings of comparative and inventive ink sets**

| Ink set | Comparative / Inventive | Gloss value |
|---|---|---|
| C-PL1 + I-INK1 | Comp | 35.2 |
| I-PL1 + I-INK1 | Inv | 46.5 |
| I-PL2 + I-INK1 | Inv | 42.3 |
| C-PL1 + I-INK2 | Comp | 31.7 |
| I-PL1 + I-INK2 | Inv | 53.4 |
| I-PL2 + I-INK2 | Inv | 56.4 |
| C-PL1 + I-INK3 | Comp | 32.5 |
| I-PL1 + I-INK3 | Inv | 56.9 |
| I-PL2 + I-INK3 | Inv | 58.0 |
| C-PL1 + I-INK4 | Comp | 45.0 |
| I-PL1 + I-INK4 | Inv | 64.8 |
| I-PL2 + I-INK4 | Inv | 66.4 |

From the results in Table 4 , it is clear that the coatings of ink sets comprising pre-treatment liquids according to claim 1 lead to a substantial higher gloss than the coatings applied with pre-treatment liquids not containing the microcaps stabilized by a polyoxyethylene glycol alkyl ether.

**Table 5: Gloss values of coatings with inventive ink sets**

| Ink set | Comparative / Inventive | Gloss value |
|---|---|---|
| C-PL1 + I-INK5 | Comp | 35.9 |
| I-PL1 + I-INK5 | Inv | 43.8 |
| I-PL2 + I-INK5 | Inv | 44.2 |
| C-PL1 + I-INK6 | Comp | 36.5 |
| I-PL1 + I-INK6 | Inv | 58.8 |
| I-PL2 + I-INK6 | Inv | 59.5 |
| C-PL1 + I-INK7 | Comp | 42.9 |
| I-PL1 + I-INK7 | Inv | 59.0 |
| I-PL2 + I-INK7 | Inv | 58.7 |
| C-PL1 + I-INK8 | Comp | 41.7 |
| I-PL1 + I-INK8 | Inv | 62.7 |
| I-PL2 + I-INK8 | Inv | 60.7 |

Also for ink sets containing the inventive microcaps, it is clear from Table 5 that the ink sets comprising pre-treatment liquids according to claim 1 and an ink containing a non-ionic microcapsule, lead to a substantial higher gloss of the ink coatings applied on pre-treatment liquids not containing the microcaps stabilized by a polyoxyethylene glycol alkyl ether.

## Claims

1. An ink set comprising an aqueous pre-treatment liquid and an aqueous ink comprising a pigment and a first water-soluble organic solvent, the aqueous pre-treatment liquid comprises a fixing agent, a second water-soluble organic solvent, a microcapsule comprising a crosslinked polymeric shell surrounding a core, the core comprises a second polymer; **characterized in that** the microcapsule is stabilized by means of a polyoxyethylene glycol alkyl ether.

2. The ink set according to Claim 1 wherein the polymeric shell comprises a polymer selected from the group consisting of poly(urea), poly(urethanes), poly(amides), poly(esters), poly(carbonates), poly(sulfonamides) or combinations thereof.

3. The ink set according to any of the preceding claims wherein the second polymer is selected from the group consisting of poly(urethanes) and copolymers thereof, acrylics and copolymers thereof, poly(esters), poly(styrenes) and copolymers thereof, poly(vinyl amides) and copolymers thereof, poly(olephines) and copolymers thereof, poly(vinyl alcohol) derivatives and copolymers thereof, poly(acetals) and copolymers thereof, poly(ethers) and copolymers thereof, poly(vinyl ethers) and copolymers thereof, polyvinyl (esters) and copolymers thereof, poly(imides) and copolymers thereof, poly(imines) and copolymers thereof, polycarbonates and copolymers thereof, poly(vinyl chloride) and copolymers thereof, poly(vinylidene chloride) and copolymers thereof poly(amic acids) and copolymers thereof, poly(saccharides) and cellulose.

4. The ink set according to any of the preceding claims wherein the polyoxyethylene glycol alkyl ether is a C₁₂-C₁₈ polyoxyethylene glycol alkyl ether having an ethylene oxide number equal to 100 or less and equal to 10 or more.

5. The ink set according to any of the preceding claims wherein the first water-soluble organic solvent is a water-soluble alkane diol in an amount not less than 3 wt.% and not more than 60 wt.% with respect to the total weight of the ink.

6. The ink set according to any of the preceding claims wherein the fixing agent is a multivalent metal salt or a cationic polymer.

7. The ink set according to any of the preceding claims wherein the aqueous inkjet ink further comprises a microcapsule comprising a crosslinked polymeric shell surrounding a core, the core comprises a second polymer.

8. The ink set according to Claim 7 wherein the aqueous inkjet ink further comprises a polyoxyethylene glycol alkyl ether.

9. The ink set according to Claim 8 wherein the polyoxyethylene glycol alkyl ether is a C₁₂-C₁₈ polyoxyethylene glycol alkyl ether having an ethylene oxide number equal to 100 or less and equal to 10 or more.

10. The ink set according to any of the preceding claims wherein the pigment is encapsulated by means of a cross-linked polymeric shell.

11. The ink set according to any of the preceding claims wherein a varnish is included, the varnish comprises water and a resin.

12. The ink set according to any of the preceding claims wherein the second water-soluble organic solvent is a water-soluble alkane diol in an amount not less than 3 wt.% and not more than 60 wt.% with respect to the total weight of the pre-treatment liquid.

13. An inkjet recording method comprising the steps of:
a) applying a pre-treatment liquid as defined in claims 1 to 12 on a substrate to form a pre-treatment coating; and
b) optionally at least partially drying the pre-treatment liquid; and
c) jetting the aqueous inkjet ink as defined in claims 1 to 12, at least partially onto the pre-treatment coating and
d) drying the jetted inkjet ink and if step b) was not performed, drying the pre-treatment liquid by applying heat.

14. The inkjet recording method according to Claim 13 wherein a varnish as defined in Claim 11, is applied after step c) or step d).
